# EUROPEAN PATENT APPLICATION

(11) **EP 2 617 565 A1**
(43) Date of publication of application: **24.07.2013**
(21) Application number: 13151938.1
(22) Date of filing: 18.01.2013
(51) Int. Cl.: B32B 5/26, A41D 13/00

(54) **Multi-layer textile structure for making a clothing item and clothing item comprising such a multi-layer textile structure**

(30) Priority: 19.01.2012 IT VR20120011
(71) Applicant: Dainese S.p.A., 36060 Molvena VI (IT)
(72) Inventor: Frizzo, Antonio, 36060 Molvena, Vicenza (IT)
(74) Representative: Manfrin, Marta

(57) **Abstract**

The present disclosure relates to a multi-layer textile structure (10, 110) for making a clothing item (30, 40), said multi-layer textile structure (10, 110) comprising a first layer (13) for protecting and a second layer (14) of wadding having a basis weight of 100 g/m² ± 5% and having fibres at least partially entangled with each other, said first layer (13) overlaying said second layer (14).

## Description

The present disclosure refers in general to a multi-layer textile structure for making a clothing item, and to a clothing item including such a multi-layer textile structure.

In the field of clothing, in particular, for example, of technical clothing for sports use, the need to make clothing items that may be type-approved according to current regulations, like, e.g., Standards EN 13595 - EN 13594 - UNI EN 13634, setting the requirements of clothing items in connection with impact abrasion resistance, impact cut resistance, tear strength and burst strength, is known. In particular, to date, in order to obtain the certification of clothing items type-approved according to the above-mentioned Standards EN 13595 - EN 13594 - UNI EN 13634, stratified structures of materials that are very heavy, and also very expensive, such as, e.g., high-density polyethylene fibres (Dyneema) and aramid fibres (Kevlar, Nomex, etc.) are used. Such materials can also be matched with materials for external use of sufficient heaviness, in order to exceed the mechanic limits provided. Matching to heavy materials for external use determines however high costs for purchasing the raw material, costs unavoidably affecting the cost of the finished product.

Even more particularly, at the basis of the present disclosure, there is a recognition by the Inventors that meeting the requirements demanded by current regulations involves the making of heavy multi-layer structures that affect weight and thickness, and decrease the comfort of a clothing item once worn on.

A technical problem at the basis of the present disclosure lies in providing a multi-layer textile structure for making a clothing item allowing to overcome the drawbacks of the known art, and therefore that may allow to make a clothing item as light-weight and comfortable as possible, and/or allowing to attain further advantages and/or have further features.

At the basis of the present disclosure there is the solution idea that an improvement of comfort and lightness of weight, though meeting the requirements of impact abrasion resistance, impact cut resistance, tear strength and burst strength, can be effectively obtainable by overlaying, or stacking, a first layer made of a material suitable for abrasion resistance and intended to be facing any impact or knock source, and at least one layer of wadding having a basis weight of 100 g/m² ± 5% and having fibres at least partially entangled with each other, wherein fibre entangling is obtained, for example, by a needling process or partial needling process. The layer of wadding is intended to be facing a user wearing the clothing item and defines a pad for said clothing item. In particular, the presence of wadding having said basis weight and having fibres at least partially entangled with each other can allow to obtain a compact multi-layer textile structure, though without excessively stiffening the material, obtaining a valid compromise between weight and performance.

In one embodiment, the layer of wadding has undergone a partial needling process or needling process, therefore it is a preliminarily needling-processed wadding. In other words, the use of a partially needling-processed layer of wadding having said basis weight proved to be a satisfactory compromise in terms of ratio among fibre density, compactness and compressibility of the material.

This specific processing technique has the purpose of compacting the fibres, intimately connecting them until obtaining a homogeneous and rather thin lap.

The mechanical advantages are linked to a consequence of the greater cohesion of fibres forming the wadding, fibres intimately connected with each other and compressed to form a lap of material with a sufficient tear strength.

Moreover, it was observed that a material needling-processed or partially needling-processed with traditional techniques, with an equal number of fibre elements, but with thicknesses and weight greater than the aforesaid basis weight, proves to be less connected, fostering the phenomenon of inter-fibre sliding due to traction occurring during abrasion: this phenomenon reduces the resistance of the material.

Other advantages, features and operation steps of the subject of the present disclosure will be made evident in the following detailed description of preferred embodiments thereof, given by way of example and not for limitative purposes.

However, it is evident how each embodiment may entail one or more of the advantages listed above; in any case, it is however not required for each embodiment to concurrently have all of the advantages listed.

It is also to be understood that all possible combinations of the afore-indicated embodiments, and of those described with reference to the following detailed description, fall within the scope of the present disclosure.

Reference will be made to the figures of the appended drawings, wherein:
- Figure 1 illustrates a view of a clothing item including a multi-layer textile structure according to one embodiment of the present disclosure;
- Figure 2 illustrates a view of a clothing item including a multi-layer textile structure according to one embodiment of the present disclosure;
- Figure 3 illustrates a schematic view of a multi-layer textile structure, with detached parts, according to the present disclosure;
- Figure 4 illustrates a schematic view, in a section along line IV-IV of Figure 1 or of Figure 2, of a multi-layer textile structure according to an aspect of the present disclosure;
- Figure 5 illustrates a schematic view, in a section along line IV-IV of Figure 1 or of Figure 2, of a multi-layer textile structure according to an aspect of the present disclosure.

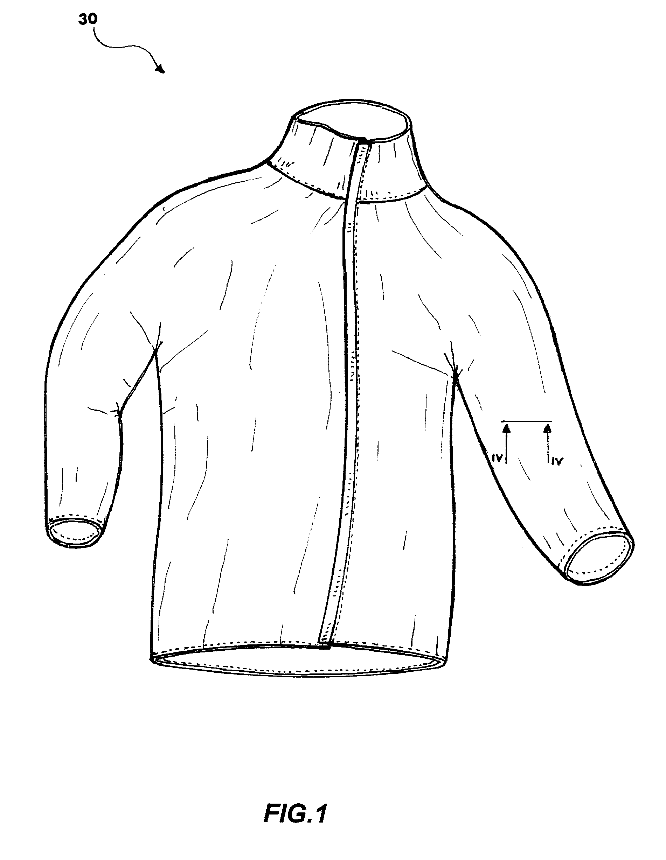

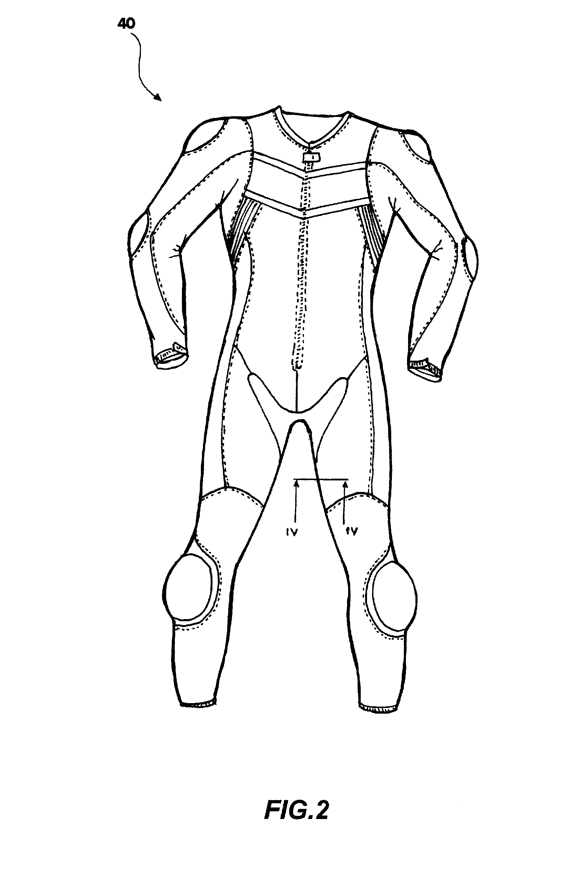

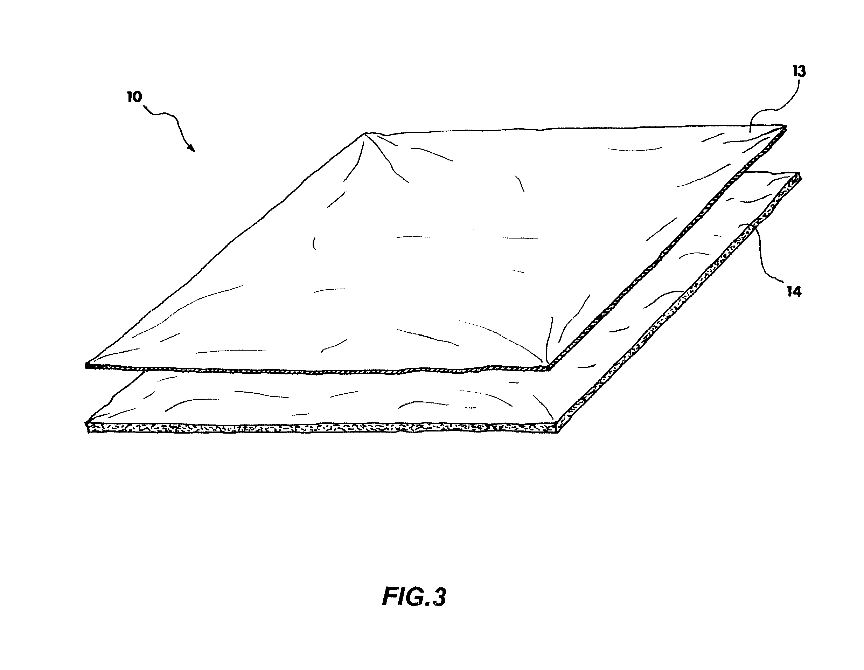

Referring to Figures 1-5, a multi-layer textile structure according to the present disclosure is denoted by reference number 10, 110.

The multi-layer textile structure 10, 110 includes a first layer 13 for protecting, made of a material suitable for offering sufficient abrasion resistance, and a second layer 14 of wadding. The first layer 13 (of flexible-type material) is intended to be facing an impact source, therefore it represents an external layer in a clothing item 30, 40, whereas the second layer 14 faces inside and acts as pad for the clothing item 30, 40.

In particular, the first layer 13 may be made of leather, leatherette, fabric, i.e. of a material having sufficient/satisfactory mechanical resistances (and strengths) when subjected to tests for impact abrasion resistance, impact cut resistance, tear strength and burst strength, wherein such tests are performed in accordance with current regulations.

According to an aspect of the present disclosure, the second layer 14 of wadding has a basis weight of 100 g/m² ± 5%, in the example of 100 g/m². In particular, it was found that the second layer 14, and in particular the indicated basis weight value of wadding, can allow to increase the aforesaid mechanical resistances (and strengths) of the multi-layer textile structure 10, 110 (impact abrasion resistance, impact cut resistance, tear strength and/or burst strength) without significantly affecting the overall weight of the structure. Moreover, thanks to the wadding it is possible to obtain an increase of a comfort feeling, related to the softness and the compressibility of the stratification, an increase of the heat insulating power, also limiting the costs of the materials.

In the embodiment illustrated in the drawings by way of example and not for limitative purposes, the second layer 14 of wadding is made of polyester fibre, of polypropylene fibre, of viscose fibre or of fibres of materials having similar features and properties.

Moreover, in the embodiment illustrated in the drawings by way of example and not for limitative purposes, the second layer 14 of wadding is of wadding preliminarily treated by a needling process.

This process is obtained by subjecting, in a carding machine, a mat or a layer of wadding fibres to a vertical action of needles moving upward and downward with a reciprocating motion.

This needling process can give compactness to wadding at the outlet of the carding machine, thanks to a connecting and a marked entanglement of the fibres. Therefore, a nonwoven fabric is obtained, provided with a sufficient firmness due to penetration of part of the fibres vertically dragged by needle motion.

As anticipated above, said second layer 14 of wadding was subjected to a partial needling process on finished wadding. I.e., the finished wadding is needling-processed before being associated with the first layer 13.

With the partial needling process of a finished wadding of 100 g/m² ± 5% the structure can be further compacted without excessively stiffening the material, obtaining an even better result between weight and mechanical performance of the multi-layer textile structure according to the present disclosure.

In particular, the Inventors of the present disclosure recognized that, fibre number and typologies being equal, in use, a wadding, optionally a partially needling-processed wadding, having a basis weight of >100 g/m² ± 5%, is less connected than a wadding having a basis weight of 100 g/m² ± 5%, and this fosters an inter-fibre sliding phenomenon due to traction occurring during an abrasion: this phenomenon reduces the strength of the material.

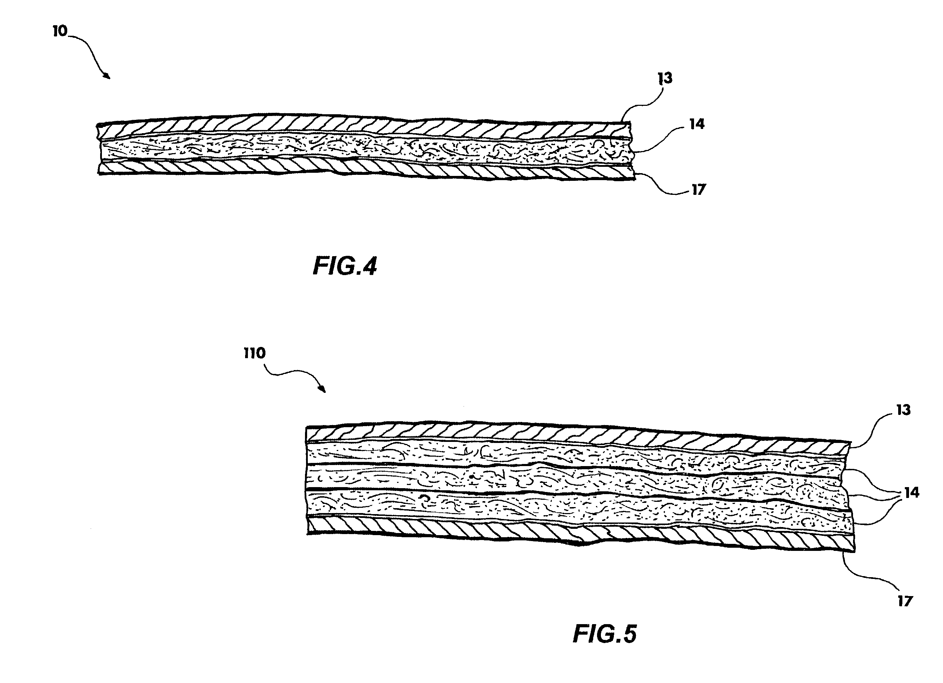

Then, to the multi-layer textile structure other layers of different materials may be added and overlaid onto the side of the second layer 14 in order to further increase the mechanical performance of a stratification, as visible in the multi-layer textile structure 110 of the embodiment of Figure 5.

A method for making the multi-layer textile structure 10 is as follows.

The first layer 13 and the second layer 14, optionally partially needling-processed, of wadding are coupled to form the multi-layer textile structure 10. A coupling process may be a fixing to define a matelassé structure. Alternatively, an overlaying of the first layer 13 or the second layer 14 and respective perimetrical fixing by stitching or gluing may be provided.

In an alternative embodiment, an applying of specific adhesives adapted to ensure joining between the first layer 13 and the second layer 14, or the applying of coupling techniques by adhesive films or resins may be provided.

As anticipated above, depending on operative needs or the technical item for which the multi-layer textile structure 10, 110 is intended, the multi-layer textile structure 110 may include a plurality of second layers 14.

The first layer 13 and the second layer 14 can then be fixed to define a matelassé structure, overlaid or glued to a lining 17 associated with the second layer 14.

The obtained multi-layer textile structure 10, 110 can be utilized as a material constituting part of a clothing item, such as, e.g., a motorcyclist suit 40 or a jacket 30. Alternatively, the multi-layer textile structure can be utilized as cover surface for a clothing item.

In particular, for making a clothing item, a method is as follows.

A first layer 13, or external layer, to be utilized depending on the body zone to be protected, and/or based upon expected mechanical performance, is singled out. One or more second layers 14 of wadding, which may be partially needling-processed, are positioned underneath the first layer 13, by manufacturing techniques such as stitching, fixing to define a matelassé structure, hot coupling with suitable materials adapted to ensure anchoring between the second layer 14 of wadding and the first layer 13.

Such coupling techniques are known to a person skilled in the art, and therefore are not reported herein. Nonwoven fabrics may be provided, having the function of inner layer 17, which overlay the second layer 14 to prevent protrusion of filaments of polyester fibre, polypropylene fibre, or viscose fibre from the second layer 14.

In order to check the performance of the multi-layer textile structure, the employ of instruments and analytic control methods according the aforesaid Standards EN 13595- EN 13594 - UNI EN 13634 is provided, such as:
- Mass per unit area: for checking and determining the weight ;
- "*Impact Abrasion Resistance Tester*": for checking and determining the impact abrasion resistance;
- "*Impact Cut Resistance Tester*": for checking and determining the impact cut resistance;
- electronic dynamometer for checking and determining the mechanical performance, such as: tensile strength and respective ultimate elongation and tear strength.

Therefore, it is possible to make ultralight-weight and comfortable sports clothing items, certified EN 13595- EN 13594 - UNI EN 13634, both for technical use and for sports use. In fact, the multi-layer textile structure subject of the present disclosure finds application in the production of clothing for different sports practice-related disciplines in which a demand of protection from mechanical events such as knocks, impacts, abrasions, perforations, from bad weather, and a particularly high comfort level are provided for, like, e.g.: motorcycling, biking, motor racing, rollerblading, skateboarding, skiing, snowboarding, freeriding, equestrianism; and for military clothing.

### Comparative tests

### First comparative test

A multi-layer textile structure according to the present disclosure, e.g., including a first layer 13 of so-called Cordura 500 fabric and three second layers 14 of wadding (100% POLYESTER, PARTIALLY NEEDLING-PROCESSED) having a basis weight of 100 g/m² ± 5% , was subjected to a comparative test with structures without wadding, i.e. a structure including a single first layer 13 of Cordura 500, and a structure including three first layers 13 of Cordura 500.

To perform the comparison, all three samples were subjected to abrasion resistance test and to impact cut resistance test according to Standard EN 13595-4.

**Comparative Table 1**

| ITEM | Weight | Impact abrasion resistance | Impact cut resistance (falling speed: 2.8 m/s) |
|---|---|---|---|
| CORDURA 500 | 240 g/m² | 0.1 seconds | > 30 mm |
| Three first layers 13 of Cordura 500 | 720 g/m² | 0.6 seconds | 23 mm |
| Multi-layer textile structure including a first layer 13 of Cordura 500 and three second layers 14 of wadding (100 g/m²) of 100% Polyester | 540 g/m² | 3.0 seconds | 19 mm |

The comparative table demonstrates how the stratification utilized succeeds to ensure a sensible increase of mechanical impact abrasion and impact cut resistances (the value denotes blade penetration depth, expressed in mm), despite the weight reduction and comfort increase given by the presence of a layer of wadding.

### Second comparative test

In a further comparative test, a multi-layer textile structure according to the present disclosure, e.g., including a first layer 13 of so-called Cordura 500 fabric and three second layers 14 of wadding (100% POLYESTER, PARTIALLY NEEDLING-PROCESSED) having a basis weight of 100 g/m² ± 5%, was subjected to a comparative test with
- a structure without wadding, i.e. a structure including three first layers 13 of Cordura 500;
- a multi-layer textile structure including a first layer 13 of so-called Cordura 500 fabric joined to three second layers 14 of wadding (100% POLYESTER, PARTIALLY NEEDLING-PROCESSED) having a basis weight of 300 g/m² ± 5%, and
- a multi-layer textile structure including a first layer 13 of so-called Cordura 500 fabric joined to three second layers 14 of wadding (100% POLYESTER, PARTIALLY NEEDLING-PROCESSED) having a basis weight of 60 g/m² ± 5%. To perform the comparison, all four samples were subjected to impact abrasion resistance test and impact cut resistance test according to Standard EN 13595-4.

**Comparative Table 2**

| ITEM | Weight | Impact abrasion resistance (EN 13595-2) | Impact cut resistance (Falling speed: 2.8 m/s) (EN 13595-4) |
|---|---|---|---|
| CORDURA 500 | 240 g/m² | 0.1 seconds | > 30 mm |
| Three first layers 13 of Cordura 500 | 720 g/m² | 0.6 seconds | 23 mm |
| Multi-layer textile structure including a first layer 13 of Cordura 500 and three second layers 14 of wadding (100 g/m²) of 100% Polyester | 540 g/m² | 3.0 seconds | 19 mm |
| Multi-layer textile structure including a first layer of Cordura 500 and three second layers of wadding (60 g/m²) of 100% Polyester | 420 g/m² | 1.1 seconds | 28 mm |
| Multi-layer textile structure including a first layer of Cordura 500 and three second layers of wadding (300 g/m²) of 100% polyester | 1140 g/m² | 3.9 seconds | 15 mm |

This second comparative test allows to check that the basis weight value of 100 g/m² ± 5% can play a fundamental role for the obtainment of the desired performance. In fact, by increasing the basis weight value to 300 g/m² the effectiveness of abrasion resistance is slightly higher, to the detriment of a significant weight increase of the textile structure. In practice, the increase of mechanical performance is comparatively lower with respect to the increase of weight.

Moreover, with a basis weight value of 60 g/m² the performance effectiveness is reduced.

The subject of the present disclosure has been hereto described with reference to preferred embodiments thereof. It is understood that other embodiments might exist, all falling within the concept of the same invention, and all comprised within the protective scope of the claims hereinafter.

## Claims

1. Multi-layer textile structure (10, 110) for making a clothing item (30, 40), said multi-layer textile structure (10, 110) comprising a first layer (13) for protecting against abrasion and a second layer (14) of wadding having a basis weight of 100 g/m² ± 5% and having fibres at least partially entangled with each other, said first layer (13) overlaying said second layer (14).

2. Multi-layer textile structure (10, 110) according to claim 1, wherein said first layer (13) overlays said second layer (14) with direct contact.

3. Multi-layer textile structure (10, 110) according to claim 1 or 2, wherein said first layer (13) is intended to be facing an impact source and said second layer (14) is intended to be facing a user wearing the clothing item (30, 40).

4. Multi-layer textile structure (10, 110) according to claim 1 or 2, wherein said second layer (14) includes partially needling-processed wadding or needling-processed wadding.

5. Multi-layer textile structure (10, 110) according to any one of the preceding claims, wherein the second layer (14) defines a pad for said clothing item (30, 40).

6. Multi-layer textile structure (10, 110) according to any one of the preceding claims, comprising one or more of said second layer (14).

7. Multi-layer textile structure (10, 110) according to any one of the preceding claims, wherein said second layer (14) is located between said first layer (13) and an inner layer (17).

8. Multi-layer textile structure (10, 110) according to any one of the preceding claims, wherein said first layer (13) is made of fabric, leather or leatherette.

9. Clothing item comprising a multi-layer textile structure (10 ,110) according to any one of the preceding claims.

10. Method for making a multi-layer textile structure (10, 110) for making a clothing item (30, 40), said method including
- preparing a first layer (13) for protecting against abrasion and a second layer (14) of wadding having a basis weight of 100 g/m² ± 5% and having fibres at least partially entangled with each other;
- overlaying said first layer (13) onto said second layer (14); and
- joining said first layer (13) to said second layer (14).

11. The method of claim 10, wherein in order to entangle the fibres with each other, the second layer (14) is subjected to a needling process or partial needling process.

12. The method of claim 10 or claim 11, wherein said first layer (13) overlays said second layer (14) with direct contact.

13. The method of claim 10, 11 or 12, wherein said first layer (13) is fixed to said second layer (14) to define a matelassé structure.

14. A method according to any one of claims 10 to 13, wherein the second layer (14) is interposed between said first layer (13) and a layer of lining (17), said layer of lining (17) being intended to contain any wadding fibres protruding from said second layer (14).
